## Europäisches Patentamt
## European Patent Office
## Office européen des brevets

(19)

(11) Veröffentlichungsnummer: **0 287 869 B1**

(12)

# EUROPÄISCHE PATENTSCHRIFT

(45) Veröffentlichungstag der Patentschrift: **03.03.93**

(51) Int. Cl.⁵: **C08J 5/12**, C09J 5/00, C09J 201/00

(21) Anmeldenummer: **88105161.9**

(22) Anmeldetag: **30.03.88**

(54) **Verfahren zum Verkleben von geprägten Polyvinylchloridfolien auf Metallbändern und -bleche.**

(30) Priorität: **08.04.87 DE 3711778**

(43) Veröffentlichungstag der Anmeldung:
**26.10.88 Patentblatt 88/43**

(45) Bekanntmachung des Hinweises auf die Patenterteilung:
**03.03.93 Patentblatt 93/09**

(84) Benannte Vertragsstaaten:
**AT BE CH DE ES FR GB IT LI NL SE**

(56) Entgegenhaltungen:
US-A- 3 879 238
US-A- 4 378 398

(73) Patentinhaber: **Hoesch Stahl Aktiengesell-schaft**
**Rheinische Strasse 173**
**W-4600 Dortmund 1(DE)**

(84) Benannte Vertragsstaaten:
**DE**

(73) Patentinhaber: **Bertrand, Jürgen**
**Jägerhofstrasse 27**
**W-5600 Wuppertal 1(DE)**

(84) Benannte Vertragsstaaten:
**BE CH ES FR GB IT LI NL SE AT**

(72) Erfinder: **Bertrand, Jürgen**
**Jägerhofstrasse 27**
**W-5600 Wuppertal 1(DE)**

Rank Xerox (UK) Business Services
(3.10/3.5x/3.0.1)

**Beschreibung**

Die vorliegende Erfindung betrifft Verfahren zum Verkleben von geprägten Polyvinylchlorid (PVC)-Folien mit Metallbändern und -blechen, indem man einen üblichen Klebstoff zweischichtig aufträgt, wobei die erste Klebstoffschicht auf das Metallband aufgetragen und bei üblichen Temperaturen getrocknet und darauf die zweite Klebstoffschicht aufgebracht und vor der Laminierung mit einer geprägten PVC-Folie bei niedrigeren als den üblichen Temperaturen getrocknet wird.

Folienbeschichtete Metallbänder und Bleche finden in vielen Bereichen der metallverarbeitenden Industrie Verwendung. Dabei sind bekannte Einsatzgebiete z.B. Geräte- und Gehäuseverkleidung in der Unterhaltungselektronik, im Ladenbau, bei Metallmöbel oder Deckenpanelen. Die mit dekorativen Folien laminierten Metallbleche können für die genannten Zwecke nur dann verwendet werden, wenn sie ein einwandfreies, dekoratives Aussehen aufweisen und sich die laminierte Folie weder bei der üblichen Verarbeitung des Verbundmaterials wie Schneiden, Stanzen, Walzprofilieren oder Tiefziehen, noch im späteren Gebrauch bei Temperaturenbelastung, wie z.B. Geräteerwärmung löst. Um diese dauerhafte Verbindung zwischen Metallband und dekorativer Folie zu erzielen, muß üblicherweise bei der Laminierung der dekorativen Folie mit Hilfe eines Klebstoffes eine Temperatur von über 215 °C eingehalten werden. Dabei treten in aller Regel nachteilige Veränderungen des Glanzes und der Prägestruktur der verwendeten PVC-Folien ein. Dies ist auch nicht zu vermeiden, wenn unmittelbar nach der Laminierung der Verbund sofort mit Luft/Wasser gekühlt wird. Andererseits führt eine Reduzierung der Verklebungstemperatur, um z.B. eine Beeinträchtigung der dekorativen Folienoberflächen zu vermeiden, zu einer zu geringen Haftfestigkeit zwischen der Dekorfolie und dem Metallband und zu einer zu geringen Wärmebeständigkeit des Verbundes. So beschreibt die US-A-4 378 398 einen Klebstoff, der bereits bei niedrigen Temperaturen aktivierbar ist. Im Beispiel wird eine auf Stahlblech aufgetragene Klebstoffschicht nach dem Trocknen bis auf 150°C erwärmt, wonach eine geprägte PVC-Folie auflaminiert wird. Es bestand daher ein Bedarf, ein verbessertes Verklebungsverfahren zur Verfügung zu stellen, bei dem nicht nur eine ausreichende Verbundhaftung und Wärmebeständigkeit des Verbundes erzielt wird, sondern bei dem auch keine Beeinträchtigung des dekorativen Aussehens eintritt. Dies gelingt mit dem erfindungsgemäßen zweischichtigen Klebstoffverfahren.

Gegenstand der vorliegenden Erfindung sind daher Verfahren zum Verkleben von geprägten Polyvinylchloridfolien mit Metallbändern und -blechen, die dadurch gekennzeichnet sind, daß man einen wärmeaktivierbaren, vernetzenden PVC/Metall-Klebstoff zweischichtig aufträgt, wobei die erste Klebstoffschicht auf das Metallband aufgetragen und bei üblichen Temperaturen getrocknet und darauf die zweite Klebstoffschicht aufgebracht und vor der Laminierung mit der geprägten PVC-Folie bei niedrigeren als üblichen Temperaturen, nämlich bei 180 bis 195°C getrocknet wird.

Als wärmeaktivierbarer vernetzender Klebstoff wird vorzugsweise eine Mischung von Glycidyl/MethacrylatCopolymeren, organischen Peroxiden, Nitrilkautschuk und Vinylchlorid/Vinylacetatcopolymeren, Weichmachern und Antioxidantien, vorzugsweise gelöst in einem geeigneten Lösungsmittel (-Gemisch) mit einem Feststoffgehalt bis 20 Vol.-% verwendet. Die geprägten PVC-Folien, die metallisch oder nichtmetallisch pigmentiert sein können und unterschiedliche Arten von Weichmacher bzw. Härteeinstellungen aufweisen, können mit allen Metallbändern und -Blechen, die in Beschichtungsanlagen eingesetzt werden können, verklebt werden. Geeignet ist z.B. kaltgewalzter Stahl, feuerverzinkter Stahl, elektrolytisch verzinkter Stahl, legierfeuerverzinkter Stahl wie Galfan oder Galvalume, verzinnter oder verchromter Stahl, Aluminium oder Edelstahl.

Zur Durchführung des erfindungsgemäßen Verfahren wird das Metallband nach einer mechanisch/chemischen Reinigung und chemischer Vorbehandlung auf einer Beschichtungsanlage vorzugsweise im Walzenauftrag mit lösungsmittelhaltigem Klebstoff beschichtet und die Klebstoffschicht in einem nachfolgendem Heizkanal eines Trockners bei Temperaturen von 210 bis 225 °C, vorzugsweise 215 bis 220 °C Metalltemperatur getrocknet. Die Schichtdicke beträgt 5 bis 10 $\mu m$ , vorzugsweise 5 bis 6 $\mu m$ . Anschließend wird nochmals im Walzenauftrag der gleiche Klebstoff aufgetragen und bei Temperaturen von 180 bis 195 °C, vorzugsweise 185 bis 190 °C Metalltemperatur im Heizkanal eines Trockners getrocknet. Die Schichtdicke beträgt 4 bis 10 $\mu m$ , vorzugsweise 7 bis 8 $\mu m$ . Die Laminierung der geprägten PVC-Folie kann dann einseitig oder beidseitig auf die Metallbänder erfolgen.

Die Obergrenze der jeweiligen Klebstoffschichtdicke ist in erster Linie durch wirtschaftliche Gründe (Kosten des Klebers) bedingt.

Die erfindungsgemäß erhaltenen Verbunde von geprägten PVC-Folien und Metallbändern zeigen nicht nur keinerlei Beeinträchtigung der Dekorfolie, sondern auch eine ausgezeichnete Haftfestigkeit und Wärmebeständigkeit, so daß sie für die genannten Zwecke ohne Beeinträchtigung verwendet werden können.

Gegenüber dem üblichen Einschichten-Verklebungsverfahren bietet die erfindungsgemäße Zweischichtenverklebung, bedingt durch die ca. 30 °C niedrigere Kaschiertemperatur, folgende Einsatzmöglichkeiten und Vorteile:

Einwandfreie Verklebung, d.h. gute Folienhaftung ohne Veränderung der Oberfläche, von üblichen Blechkaschierfolien, bei denen es trotz guter Prägestabilität aufgrund der Fertigungsbedingungen (z.B. hohe Bandgeschwindigkeit, große Blechdicke) bisher zu Problemen und Ausfällen durch schlechte Haftung oder Folienglanz und Prägungsabflachung gekommen ist (z.B. Aufzugbau , Türzargen).

Steigerung der Banddurchlaufgeschwindigkeit um ca. 10 % bei Produktionen, die, durch die Ofenkapazität begrenzt, nicht voll ausgefahren werden konnten.

In den nachfolgenden Beispielen werden die Eigenschaften der Verbunde wie folgt bestimmt:

## 1. Dekoratives Aussehen

Durch visuelle Beurteilung werden der Glanz und die Prägestruktur der zum Einsatz kommenden Folie und des Verbundes verglichen und die jeweiligen (unerwünschten) Änderungen festgestellt.

## 2. Haftung

Gemäß ECCA-Prüfverfahren T6 (1985) "Haftung nach Tiefung", d.h. Schlagtiefung bzw. normale Tiefung mit vorherigem Gitterschnitt.

## 3. Wärmebeständigkeit (Haftung nach Wärmebeanspruchung)

Auf einer Blech-Prüfmaschine werden runde Näpfchen (Durchmesser ca. 33 mm) tiefgezogen, wobei die folienbeschichtete Seite außen liegt. Derartige Näpfchen werden im Trockenschrank 24 Stunden bei 100 °C gelagert. Anschließend wird visuell das Verhalten der Folie am Näpfchenrand beurteilt, z.B., ob eine (unerwünschte) Kräuselung bis Ablösung aufgetreten ist.

## Beispiel 1:

Ein Metallband aus feuerverzinktem Stahl mit einer Dicke von 0,7 mm wird vor der Beschichtung zur Reinigung alkalisch entfettet und mechanisch gebürstet und anschließend alkalisch passiviert. Ein so vorbehandeltes Metallband wird mit einer Durchlaufgeschwindigkeit von 60 m/min mit einem Klebstoff auf Basis einer Mischung von Glycidyl/Methacrylat-Copolymeren, organischen Peroxiden, Nitrilkautschuk und Vinylchlorid/Vinylacetat-Copolymeren, Weichmachern und Antioxidantien, gelöst in einem organischen Lösungsmittel beschichtet und im Trockner bei 216 °C Metallbandtemperatur getrocknet. Die Schichtdicke der so erhaltenen ersten Klebstoffschicht beträgt 5$\mu$m . Anschließend wird auf die erste Klebstoffschicht eine zweite Klebstoffschicht im Walzenauftrag aufgetragen und bei 185 °C Metallbandtemperatur getrocknet. Die Schichtdicke beträgt 7 $\mu$m . Auf diese beiden Klebstoffschichten wird eine Weich-PVC-Folie, halbharte Einstellung, mit Metallicpigmentierung und einer Prägung "seidenmatt" bei einer Kaschiertemperatur von 185 °C laminiert und der Verbund anschließend sofort gekühlt. Das Aussehen, die Haftung und die Wärmebeständigkeit des Verbundes werden wie oben angegeben geprüft. Die Ergebnisse sind in Tabelle 1 eingetragen.

A) Als Vergleich wird der unter 1 beschriebene Verbund in üblicher Weise hergestellt, wobei nur eine Klebstoffschicht mit einer Trockenfilmdicke von 7 $\mu$m aufgetragen und bei einer Kaschiertemperatur von 216 °C die Dekorfolie mit dem Metallband verbunden wird. Die Ergebnisse des dekorativen Aussehens, der Haftung und der Wärmeformbeständigkeit sind ebenfalls in Tabelle 1 eingetragen.

B) Wird dieser Vergleichsversuch A) wiederholt, nur mit dem Unterschied, daß die Kaschierung bei einer Temperatur um 185 °C erfolgt, so wird eine deutliche Verminderung von Wärmebeständigkeit und Haftung festgestellt. Das dekorative Aussehen, die Haftung und die Wärmebeständigkeit sind ebenfalls in Tabelle 1 eingetragen.

## Beispiel 2:

Ein Metallband aus kaltgewalztem Stahl mit einer Dicke von 0,88 mm wurde zur Reinigung alkalisch entfettet und mechanisch gebürstet. Zur chemischen Vorbehandlung wurde es sauer passiviert. Das so vorbereitete Metallband wurde bei einer Bandlaufgeschwindigkeit von 55 m/min mit einem Klebstoff, wie in Beispiel 1 beschrieben, durch Walzenauftrag beschichtet und im Trockner bei einer Metallbandtemperatur von 216 °C getrocknet. Die Schichtdicke betrug 5 μm. Darauf wurde in einem zweiten Walzenauftrag eine weitere Klebstoffschicht aufgebracht, die bei 190°C Bandtemperatur getrocknet wurde. Durch Laminierung der zweiten Klebstoffschicht mit einer Hart-PVC-Folie, die eine normale Pigmentierung und eine Prägung "Porennarbung fein" aufwies, wurde bei 190 °C der Verbund mit dem Metallband hergestellt und der Verbund anschließend sofort gekühlt. Das Aussehen, die Haftung und die Wärmebeständigkeit des Verbundes sind in Tabelle 1 eingetragen.

TABELLE 1

| Beispiel | dekoratives Aussehen | Haftung Schlagtiefe | Haftung Ablösung in mm norm. Tiefung | Wärmebeständigkeit |
|---|---|---|---|---|
| 1 | keine Veränderung | < 1 | < 1 | keine erkennbare Haftungsminderung |
| 1 A (Vergleich) | erkennbare Veränderung | < 1 | < 1 | keine erkennbare Haftungsminderung |
| 1 B (Vergleich) | keine Veränderung | > 5 | > 5 | erkennbare Haftungsminderung |
| 2 | keine Veränderung | < 1 | < 1 | keine erkennbare Haftungsverminderung |

**Patentansprüche**

1. Verfahren zum kontinuierlichen Verkleben von geprägten Polyvinylchloridfolien mit Metallbändern und -blechen, dadurch gekennzeichnet, daß man einen wärmeaktivierbaren, vernetzenden PVC-Metall-Klebstoff zweischichtig aufträgt, wobei die erste Klebstoffschicht auf das Metallband aufgetragen und bei üblichen Temperaturen getrocknet und darauf die zweite Klebstoffschicht aufgebracht und vor der Laminierung mit der geprägten PVC-Folie bei niedrigeren als üblichen Temperaturen, nämlich bei 180 bis 195°C getrocknet wird.

2. Verfahren nach Anspruch 1, dadurch gekennzeichnet, daß als Klebstoff eine Mischung von Glycidyl/Methacrylat -Copolymeren, organischen Peroxiden, Nitrilkautschuk und Vinylchlorid/ Vinylacetatcopolymeren, Weichmachern und Antioxidantien eingesetzt wird.

3. Verfahren nach Anspruch 2, dadurch gekennzeichnet, daß als Klebstoff eine Mischung, gelöst in einem geeigneten Lösungsmittel (-Gemisch) mit einem Feststoffgehalt bis 20 Vol.-% eingesetzt wird.

4. Verfahren nach Ansprüchen 1 bis 3, dadurch gekennzeichnet, daß die erste Klebstoffschicht bei einer Temperatur von 210 bis 225°C getrocknet wird.

5. Verfahren nach Ansprüchen 1 bis 4, dadurch gekennzeichnet, daß die erste Klebstoffschicht bei einer Temperatur von 215 bis 220°C, und die zweite Klebstoffschicht bei einer Temperatur von 185 bis 190°C getrocknet wird.

6. Verfahren nach Ansprüchen 1 bis 5, dadurch gekennzeichnet, daß die erste Klebstoffschicht eine Dicke von 5 bis 10 $\mu$m und die zweite Klebstoffschicht eine Dicke von 4 bis 10 $\mu$m aufweist.

7. Verfahren nach Anspruch 6, dadurch gekennzeichnet, daß die erste Klebstoffschicht eine Dicke von 5 bis 6 $\mu$m und die zweite Klebstoffschicht eine Dicke von 7 bis 8 $\mu$m aufweist.

## Claims

1. A process for the continuous adhesive bonding of embossed polyvinyl chloride films to metal sheet and strip, characterized in that a heat activated, cross-linking pvc-to-metal adhesive is applied in two layers, whereby the first adhesive layer is applied on the sheet metal and cured at usual temperatures and the second adhesive layer is applied thereto at temperatures lower than usual, i.e. 180 to 195 °C, prior to lamination with embossed pvc films.

2. A process as claimed in claim 1, characterized in that the adhesive used is a mixture of glycidyl / methacrylate copolymers, organic peroxides, nitrile butadiene rubber, and vinyl chloride / vinyl acetate copolymers, plasticizers, and anti-oxidants.

3. A process as claimed in claim 2, characterized in that the adhesive used is a mixture dissolved in a suitable solvent (mixture) having a solids content of up to 20 per cent by volume.

4. A process as claimed in claims 1 to 3, characterized in that the first adhesive layer is cured at a temperature of 210 to 225°C.

5. A process as claimed in claims 1 to 4, characterized in that the first adhesive layer is cured at a temperature of 215 to 220°C and the second adhesive layer is cured at a temperature of 185 to 190°C.

6. A process as claimed in claims 1 to 5, characterized in that the first adhesive layer has a thickness of 5 to 10 microns and the second adhesive layer has a thickness of 4 to 10 microns.

7. A process as claimed in claim 6, characterized in that the first adhesive layer has a thickness of 5 to 6 microns and the second has a thickness of 7 to 8 microns.

## Revendications

1. Procédé de collage en continu de feuilles de polychlorure de vinyle gaufrées à des bandes ou toles métalliques, caractérisé en ce que l'on applique deux couches d'une colle thermo-activable, réticulable, pour PVC-métal, tandis que la première couche de colle est appliquée sur la bande métallique et séchée à des températures usuelles, et la deuxième couche de colle est ensuite appliquée et est séchée à des températures infèrieures aux températures usuelles, soit de 180 à 195° C, avant l'application par stratification de la feuille de PVC gaufrée.

2. Procédé selon la revendication 1, caractérisé en ce que la colle employée est un mélange de copolymères de méthacrylate et de glycidyle, de peroxydes organiques, de caoutchouc nitrile et de copolymères d'acétate de vinyle et de chlorure de vinyle, de plastifiants et d'antioxydants.

3. Procéde selon la revendication 2, caractérisé en ce que la colle employée est un mélange dissous dans un solvant ou un mélange solvant approprié, avec une teneur en solides allant jusqu'à 20 % en volume.

4. Procédé selon les revendicationes 1 à 3, caractérisé en ce que la première couche de colle est séchée à une température de 210 à 225° C.

5. Procédé selon les revendications 1 à 4, caractérisé en ce que la première couche de colle est séchée à une température de 215 à 220° C, et la deuxième couche de colle est séchée à une température de 185 à 190° C.

6. Procédé selon les revendications 1 à 5, caractérisé en ce que la première couche de colle a une èpaisseur de 5 à 10 $\mu$m et la deuxième couche de colle a uns épaisseur de 4 à 10 $\mu$m.

7. Procédé selon la revendication 6, caractérisé en ce que la première couche de colle a une épaisseur de 5 à 6 $\mu$m , et la deuxième couche de colle a une épaisseur de 7 à 8 $\mu$m.